# EUROPEAN PATENT SPECIFICATION

(11) **EP 0 752 544 B1**
(45) Date of publication and mention of the grant of the patent: **24.10.2001**
(21) Application number: 96110828.9
(22) Date of filing: 04.07.1996
(51) Int. Cl.: F16H 3/66

(54) **Automatic transmission**
Automatisches Getriebe
Transmission automatique

(30) Priority: 06.07.1995 JP 17117895
(43) Date of publication of application: 08.01.1997
(73) Proprietor: AISIN AW CO., LTD., Anjo-shi Aichi-ken (JP)
(72) Inventor: Tsukamoto, Kazumasa, Anjo-shi, Aichi-ken, 444-11 (JP); Hayabuchi, Masahiro, Anjo-shi, Aichi-ken, 444-11 (JP); Nishida, Masaaki, Anjo-shi, Aichi-ken, 444-11 (JP); Nomura, Kengo, Anjo-shi, Aichi-ken, 444-11 (JP); Morimoto, Takashi, Anjo-shi, Aichi-ken, 444-11 (JP)
(74) Representative: VOSSIUS & PARTNER

(56) References cited:
- US-A- 2 584 468
- PATENT ABSTRACTS OF JAPAN vol. 950, no. 1, 20 January 1995 & JP 07 019297 A (AISIN AW), 20 January 1995,
- PATENT ABSTRACTS OF JAPAN vol. 11, no. 302 (M-629), 30 April 1987 & JP 62 093545 A (AISIN WARNER), 30 April 1987,

## Description

The present invention relates to an automatic transmission having a planetary gear unit, in particular, to a compact automatic transmission preferably applicable to a vehicle of the F·F (front engine · front drive) type. More specifically, it relates to the structure of a planetary gear unit with improved steps between gear ratios of transmission ranges.

Hitherto the present applicant has invented an automatic transmission having a planetary gear unit comprising a combination of a simple planetary gear and a double pinion planetary gear as described in JP-A-62-93545 and 7-19297. As illustrated in Figs. 6 and 8, a planetary gear unit 1 of the automatic transmission has a sun gear S and a carrier CR commonly provided for a simple planetary gear 2 and a double pinion planetary gear 3, and a first pinion P1, which engages said sun gear S, is a long pinion provided in common for both gears 2 and 3. An input shaft 7 to which the motive power from an engine is transmitted via a torque converter 5 or a lock-up clutch 6 is coupled to a ring gear R1 of the simple planetary gear 2 via a forward (first) clutch C1 as well as to the sun gear S via a direct (second) clutch C2. Further, a counter drive gear 9 comprising the output portion of the gear unit is coupled to the carrier CR. The sun gear S is stopped by a first brake B1 and is stopped via a second brake B2 and a first one-way clutch F1 in the direction in which driving force/rotation is transmitted from the engine to the wheels (hereafter referred to as positive drive/positive rotational direction). A ring gear R2 of the double pinion planetary gear 3 is stopped by a third brake B3 and is stopped by a second one-way clutch F2 with respect to the positive drive/ positive rotational direction.

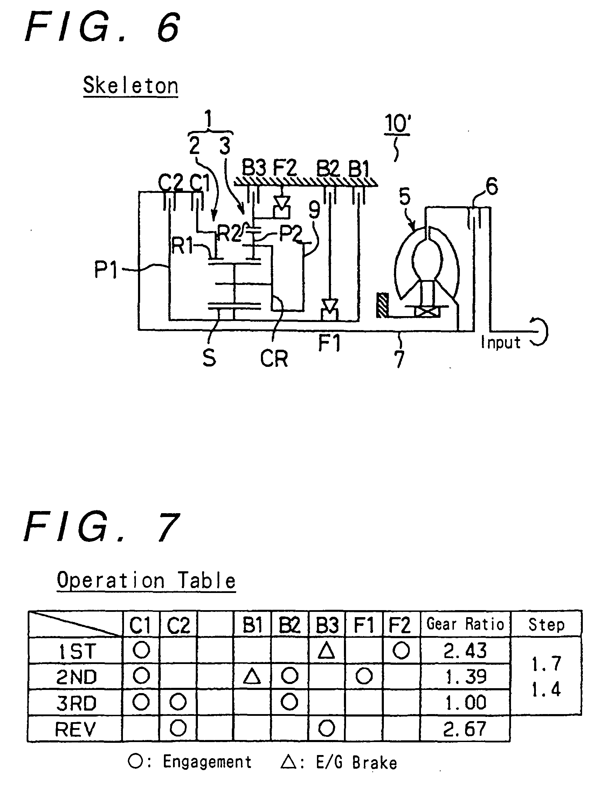

As shown in the operation table of Fig. 7, a main transmission system 10' comprising the above-mentioned planetary gear unit 1 itself provides three forward ranges and one reverse range. That is, in the first range (1ST) state, the forward clutch C1 is engaged and the second one-way clutch F2 operates so as to maintain the ring gear R2 of the double pinion planetary gear 3 in the stopped state. In this state, since rotation of the input shaft 7 is transmitted to the ring gear R1 of the simple planetary gear 2 via the forward clutch C1, and the ring gear R2 of the double pinion planetary gear is in the stopped state, the common carrier CR rotates at a drastically reduced rate in the positive direction while the sun gear S idles in the reverse direction so as to obtain said reduced rotational rate from the counter drive gear 9.

In the second range (2ND) state, in addition to the forward clutch C1, the second brake B2 is in operation, and further, operation is switched from the second one-way clutch F2 to the first one-way clutch F1. In this state, the common sun gear S is stopped by the second brake B2 and the first one-way clutch F1, and thus rotation of the ring gear R1 of the simple planetary gear transmitted from the input shaft 7 via the forward clutch C1 rotates the carrier CR at a reduced rate in the positive direction while the ring gear R2 of the double pinion planetary gear idles in the positive direction so as to obtain the reduced rotational rate from the counter gear 9.

In the third range (3RD) state, in addition to the forward clutch C1, the direct clutch C2 is engaged. In this state, rotation of the input shaft 7 is transmitted to the common sun gear S as well as to the ring gear R1 of the simple planetary gear so as to rotate the gear unit 1 comprising the single and double pinion planetary gears 2, 3 integrally to transmit the lock-up rotation to the counter drive gear 9.

In the reverse range (REV) state, the direct clutch C2 and the third brake B3 are engaged. In this state, since rotation of the input shaft 7 is transmitted to the sun gear S via the direct clutch C2 and the ring gear R2 of the double pinion planetary gear is maintained in the stopped state by the third brake B3, the carrier CR rotates in the reverse direction while the ring gear R1 of the simple planetary gear idles in the reverse direction so as to obtain the reverse rotation from the counter gear 9.

As to the operation of the engine brake, the operating state is indicated by triangle marks as shown in Fig. 7. That is, in the first range state, the third brake B3 is engaged and the ring gear R2 of the double pinion planetary gear is maintained in the stopped state, while said ring gear R2 is caused to keep rotating by the second one-way clutch F2 if the brake B3 is not engaged. In the second range state, the first brake B1 is engaged and the common sun gear S is maintained in the stopped state, while said common sun gear S is caused to keep rotating by the one-way clutch F1 if the brake B1 is not engaged.

A gear ratio λ of the above-mentioned gear ranges can be calculated as follows with Z indicating the number of the teeth of the gear and a subscript indicating the gear: as to the first range, λ ₁= 1+(Z_{R2}/Z_{R1}); as to the second range, λ ₂= 1+(Z_{S}/Z_{R1}) ; as to the third range, λ ₃= 1; and as to the reverse range, λ _{R}= 1-(Z_{R2}/Z_{S}).

In an automatic transmission system 10' comprising the above-mentioned planetary gear unit 1, since torque from the input shaft 7 is transmitted to the ring gear R1 having a diameter larger than that of the sun gear S in the forward movement, the tangential force applied to the engaged portion becomes smaller in comparison with the case in which torque is inputted to the sun gear of such a gear unit as a Ravigneaux type, so that the bearing and bending stresses acting upon the engaged portion become smaller. Accordingly, the present automatic transmission enables obtaining sufficient durability without broadening the width of the teeth. Besides, since it has sun gears integrally connected and carriers integrally coupled to each other, an additional motive power transmitting member is not required between the two planetary gears, consequently reducing the axial dimension to achieve a compact structure.

On the other hand, the gear ratio λ ₂ of the second range (2ND) in the above-mentioned planetary gear unit 1 is determined by the number of teeth of the sun gear S and the ring gear R1 of the simple planetary gear 2, that is, λ ₂ = 1 + (Z_{S}/Z_{R1}). Accordingly, a smaller number of teeth of the sun gear S, that is, a smaller diameter of the sun gear, or a larger number of teeth of the ring gear R1, that is, a larger diameter of the ring gear is required in order to obtain a second range gear ratio λ ₂ of a smaller value. However, a smaller diameter of the sun gear cannot be achieved since the input shaft is located so that it passes through the inner diameter thereof. Further a larger diameter of the ring gear R1 enlarges the radial dimension of the automatic transmission and thus damages the compactness thereof. Therefore, in the above-mentioned prior art, the gear ratio in the second range is comparatively large so as to achieve a compact structure of the planetary gear unit.

In the third range (3RD) state, since the planetary gear unit rotates integrally, the gear ratio λ ₃ is equal to 1.0, the setting can not be changed, and the proportion of the gear ratio λ ₂ to the gear ratio λ ₃ (λ ₂/ λ ₃), which will be described hereafter as the gear ratio step between the second range and the third range, becomes larger if the gear ratio λ ₂ is comparatively large as mentioned above. In general, a large gear ratio step at a high gear range side may cause so-called "busy shifts", i.e., frequent shifting in driving at high speed.

That is, when driving at high speed in the third range to encounter a moderate uphill and the third range can not provide a sufficient motive power, the speed of the vehicle becomes lower so that shift-down to the second range becomes necessary in order to maintain the high speed drive. In this case, with a large gear ratio step as in the prior art, sometimes from a small motive power state, a motive power state larger than the motive power sufficient to achieve a certain high speed drive of the vehicle is provided. In this case, a certain high speed driving state of the vehicle is achieved soon to shift up to the third range. However, since the third range provides an insufficient motive power as mentioned above, in order to maintain a certain high speed drive, shifting down to the second range becomes necessary. By repeating such operations, busy shifting occurs.

On the contrary, with a small gear ratio step, since the motive power does not become as large as in the above-mentioned prior art even when a down shift to the second range has been carried out, a motive power sufficient to maintain a certain high speed driving can be obtained so as to prevent the above-mentioned busy shifting and achieve a smooth drive of the vehicle.

Therefore a first object of the present invention is to provide an automatic transmission which achieves a smaller gear ratio step at a higher range side while maintaining compactness to prevent busy shifting when driving at a high speed to ensure a smooth drive of the vehicle.

A second object of the present invention is to provide an automatic transmission wherein the gear ratio relationship between the first range and the reverse range is not damaged by reducing the gear ratio step at a higher range side.

The present invention has been achieved with a view to solving the above-mentioned problems. An automatic transmission according to the present invention comprises an input member (7) to which the motive power is transmitted from an engine, an output member (9) from which the motive power is transmitted to wheels and an automatic transmission system (10) having a planetary gear unit (1), wherein rotation from the input member (7) is outputted to the output member (9) via a plurality of transmission paths of the planetary gear unit (1), said planetary gear unit (1) comprising a first ring gear (R1), a first pinion (P1) engaging the first ring gear, a second pinion (P2) connected to the first pinion so as to rotate integrally, a third pinion (P3) engaging the second pinion (P2), a second ring gear (R2) engaging the third pinion (P3), a first sun gear (S2) engaging the second pinion (P2), and a carrier (CR) supporting the first, second and third pinions and connected to the output member (9), said first pinion (P1) having a diameter smaller than that of the second pinion (P2), a first range being achieved by transmitting rotation of the input member (7) to the first ring gear (R1) as well as stopping the second ring gear (R2), a second range being achieved by transmitting rotation of the input member (7) to the first ring gear (R1) as well as stopping the first sun gear (S2), and a third range being achieved by rotating the planetary gear unit (1) integrally with the input member (7).

More preferably, the above-mentioned planetary gear unit (1) is in engagement with the first pinion (P1) and further comprises a second sun gear (S1) which can rotate relatively with respect to the first sun gear (S2), wherein a reverse range is achieved by transmitting rotation of the input member (7) to the second sun gear (S1) as well as stopping the second ring gear (R2).

It is further preferable that the above-mentioned automatic transmission system (10) comprises a first clutch (C1) interposed between the input member (7) and the first ring gear (R1), a second clutch (C2) interposed between the input member (7) and the second sun gear (S1), a first stopping means (B1, B2, F1) capable of selectively stopping the first sun gear (S2), and a second stopping means (B3, F2) capable of selectively stopping the second ring gear.

It is further preferable to provide a sub-automatic transmission system (40) comprising three forward ranges. The combination of the sub-automatic transmission system with the above-mentioned automatic transmission system (10) achieves five forward ranges and one reverse range.

According to the above-mentioned construction, in driving forward, torque from the input member (7) is transmitted to the first ring gear (R1) and inputted to the planetary gear unit (1) so as to selectively change the transmission paths of the planetary gear unit (1) and, therefore, the transmission ratio. Then, the torque is transmitted via the carrier (CR) to the output member (9).

In the second range state, since the first pinion (P1) has a diameter smaller than that of the second pinion (P2) and the first and second pinions are coupled integrally, the gear ratio (λ ₂) of the second range can be described as 1+ (Z_{S2}/Z_{R1}) × (Z_{P1}/Z_{P2}) with Z indicating the number of teeth of each gear. As (Z_{P1}/Z_{P2}) is equal to 1.0 or less, the gear ratio can be made smaller without enlarging the diameter of the first ring gear (R1) drastically (without enlarging Z_{R1}).

In the third range state, since the planetary gear unit (1) rotates integrally, the gear ratio is equal to 1.0. As the above-mentioned gear ratio of the second range becomes smaller, the gear ratio step between the second range and the third range becomes smaller.

The first range gear ratio (λ ₁) can be described as 1 + (Z_{R2}/Z_{R1}) × (Z_{P1}/Z_{P2}), which is smaller compared with the prior art because of the multiplication by (Z_{P1}/Z_{P2}), which is equal to 1.0 or less. Further, the reverse range gear ratio (λ _{R}) can be described as 1 - (Z_{R2}/Z_{S1}) × (Z_{P1}/Z_{P2}), the absolute value of which is similarly smaller because of the multiplication by (Z_{P1}/Z_{P2}), which is equal to 1.0 or less. Since a smaller diameter of the first pinion (P1) results in a larger second sun gear (S1) (that is, Z_{S1} becomes larger ) , (Z_{R2}/Z_{S1}) becomes smaller, further making the reverse range gear ratio (λ _{R}) smaller.

Accordingly, in general, the smaller a gear ratio difference between the lowest forward range and the reverse range is, the more preferable the controllability of the automatic transmission becomes. As mentioned above, by making the gear ratio step smaller at a higher range side, a first range gear ratio, which is the lowest forward range gear ratio, becomes smaller. Therefore, the absolute value of the reverse range gear ratio step becomes smaller.

Further, although the gear ratio width becomes smaller by making the gear ratio step smaller at a higher range side, a gear ratio of sufficient width can be ensured as whole by providing five forward ranges in combination with a sub-transmission system (40) having three forward ranges. Thus a desirable gear ratio step is obtained in the entire automatic transmission from the lowest range to the highest range.

Reference numerals and notations in the parentheses used hitherto are not intended to limit the construction of the present invention but to make the description thereof understandable.
Fig. 1 is a schematic diagram illustrating an automatic transmission system of the present invention.
Fig.2 is a sectional view of the automatic transmission system as shown in Fig. 1.
Fig. 3 is a table to show the operation of the automatic transmission system as shown in Fig. 1.
Fig. 4 is a schematic diagram illustrating an automatic transmission having five forward ranges and one reverse range according to the present invention.
Fig. 5 is a table showing the operation of the automatic transmission of Fig. 4.
Fig. 6 is a schematic diagram illustrating an automatic transmission system of the prior art.
Fig. 7 is a table showing the operation of the automatic transmission system of Fig. 6.

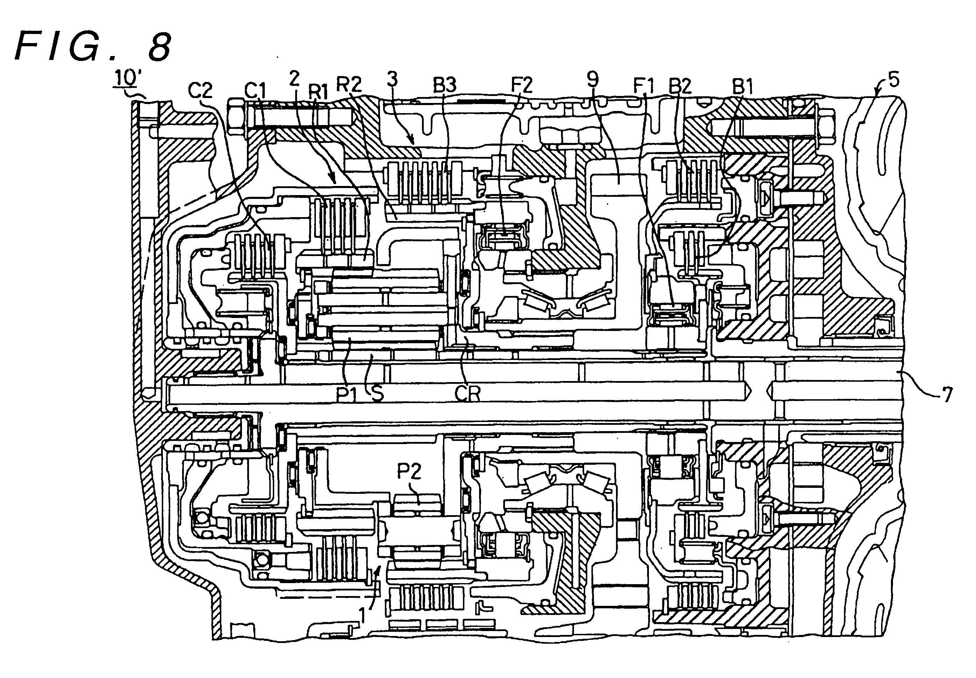

Fig. 8 is a sectional view of the automatic transmission system of Fig. 6.

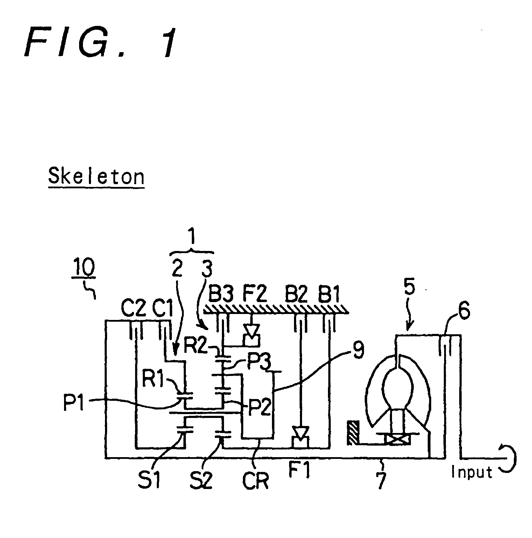

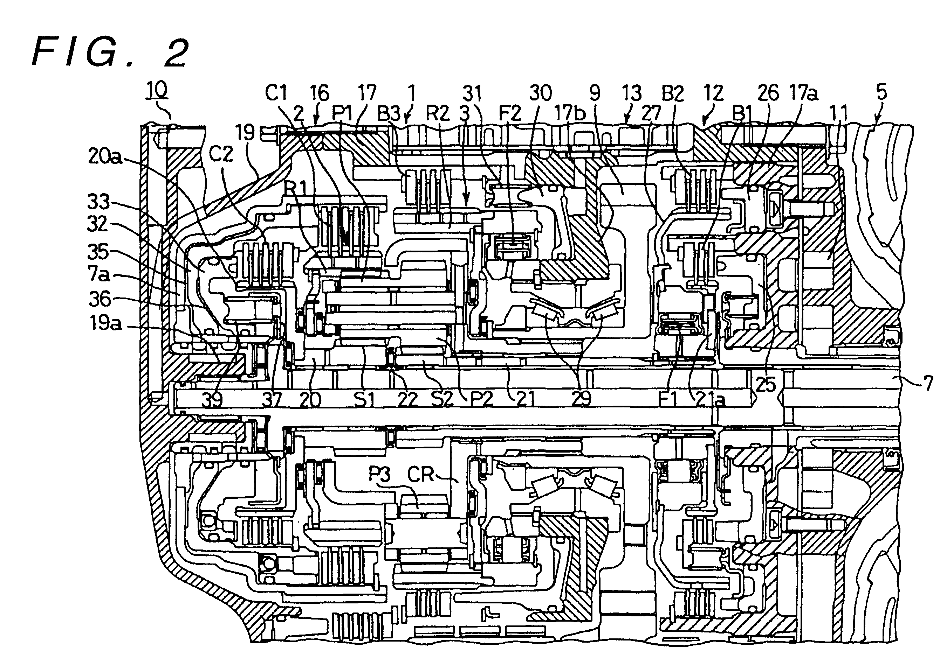

A main automatic transmission system 10 according to an embodiment of the present invention is illustrated in Fig.1 and 2. Fig. 1 is a skeleton diagram and Fig. 2 is a sectional view. A main automatic transmission system 10 is arranged on a first shaft aligned to an engine output shaft and is provided with an input shaft 7 to which the engine motive power is transmitted via a torque converter 5 having a lock-up clutch 6. On the first shaft, from an oil pump 11 adjacent to the torque converter 5 to the axial rear end, a brake portion 12, an output portion 13, a planetary gear unit portion 1 and a clutch portion 16 are arranged in this order and are covered with an axle case 17 and a rear cover 19 integrally joined.

The planetary gear unit portion 1 comprises a simple planetary gear 2 and a double pinion planetary gear 3. The simple planetary gear 2 comprises a (second) sun gear S1, a (first) ring gear R1, and a carrier supporting a first pinion P1 engaging said gears, while the double pinion planetary gear 3 comprises a (first) sun gear S2, a (second) ring gear R2 and a carrier supporting a second pinion P2 in engagement with the sun gear S2 and a third pinion P3 being in engagement with the ring gear R2 in such a manner that both pinions P2, P3 are in mutual engagement. The sun gear S1 of the simple planetary gear 2 and the sun gear S2 of the double pinion planetary gear 3 are rotatably supported respectively by first and second hollow shafts 20, 21, which are also rotatably supported by the input shaft 7. A thrust bearing 22 is interposed between the two hollow shafts 20, 21 to allow the two shafts 20, 21 to rotate relative to each other. The carrier CR is provided for both planetary gears 2, 3 in common, the above-mentioned first pinion P1 and the second pinion P2 engaging the sun gears S1, S2 respectively are connected so as to rotate integrally, and the first pinion P1 has a diameter smaller than that of the second pinion P2, namely, a smaller number of teeth Z_{P1}. Accordingly, the sun gear S1 of the simple planetary gear 2 engaging the first pinion P1 has a diameter larger than that of the sun gear S2 of the double pinion planetary gear 3 engaging the second pinion P2, that is, (Z_{S1}>Z_{S2}).

In the brake portion 12, a first one-way clutch F1, a first brake B1 and a second brake B2 are arranged in this order from the radially inner side to the radially outer side. Further hydraulic servos 25, 26, which are provided adjacently to the brakes respectively in a case 17a integrally coupled to a case of the oil pump 11, are arranged parallel to the radial direction. The first brake B1 is interposed between a flange portion 21a at the edge of the second hollow shaft 21 and an edge portion extending from the pump case 17a, the second brake B2 is arranged between a flange portion 27 extending from an outer race of the first one-way clutch F1 and an edge portion extending from the pump case 17a, and the first one-way clutch F1 is arranged between the second hollow shaft 21 and the second brake B2.

On the other hand, the output portion 13 has a counter drive gear 9 supported by bearings 29 on a partition 17b formed on the axle case 17, and said gear 9 is coupled to the carrier CR via a spline. Further, an outer race portion of the bearings 29 extending axially is unrotatably fixed to the partition 17b. A second one-way clutch F2 is interposed between the thus extending portion and the coupling portion for coupling said one-way clutch F2 integrally to the ring gear R2 of the double pinion planetary gear 3. Further, a third brake B3 is interposed between the outer periphery of the ring gear R2 and the axle case 17, a hydraulic servo 30 is arranged on one side of the partition 17b, a piston of the hydraulic servo 30 axially extends like teeth of a comb to control the third brake B3, and a return spring 31 is arranged in the teeth-of-a-comb portion.

The clutch portion 16 comprises a forward clutch C1 and a direct clutch C2, and is located at the edge of the main automatic transmission system 10 to be stored in a trans-axle rear cover 19 portion comprising an integral case. Further, a flange portion 7a is coupled integrally to a boss portion 19a formed on the cover 19 to be fitted to the edge of the input shaft 7, the flange portion 7a is fitted by a movable member 32, and further, the movable member 32 is fitted by a piston member 33. The movable member 32 comprises an oil chamber 35 between the inner peripheral portion thereof and the flange portion 7a. The outer peripheral portion thereof is coupled to the flange portion 7a to prevent only relative rotation and is opposed to the forward clutch C1 with a slight gap therebetween to form a hydraulic servo for the forward clutch C1. On the other hand, an oil chamber 36 is formed between the piston portion 33 and the movable member 32. The other side of the piston portion is opposed to the direct clutch C2 to form a hydraulic servo for the direct clutch C2. Further, a spring 39 is located between the piston member 33 and a ring 37 bonded to the input shaft 7 in a compressed state, the spring 39 comprising a return spring commonly provided for the piston members 32, 33 of the two hydraulic servos. The forward clutch C1 is interposed between the inner periphery of the radially outer portion of the flange portion 7a and the outer periphery of the ring gear R1 of the simple planetary gear 2, and the direct clutch C2 is interposed between the inner periphery of the movable member 32 and a flange portion 20a connected to the edge of the first hollow shaft 20.

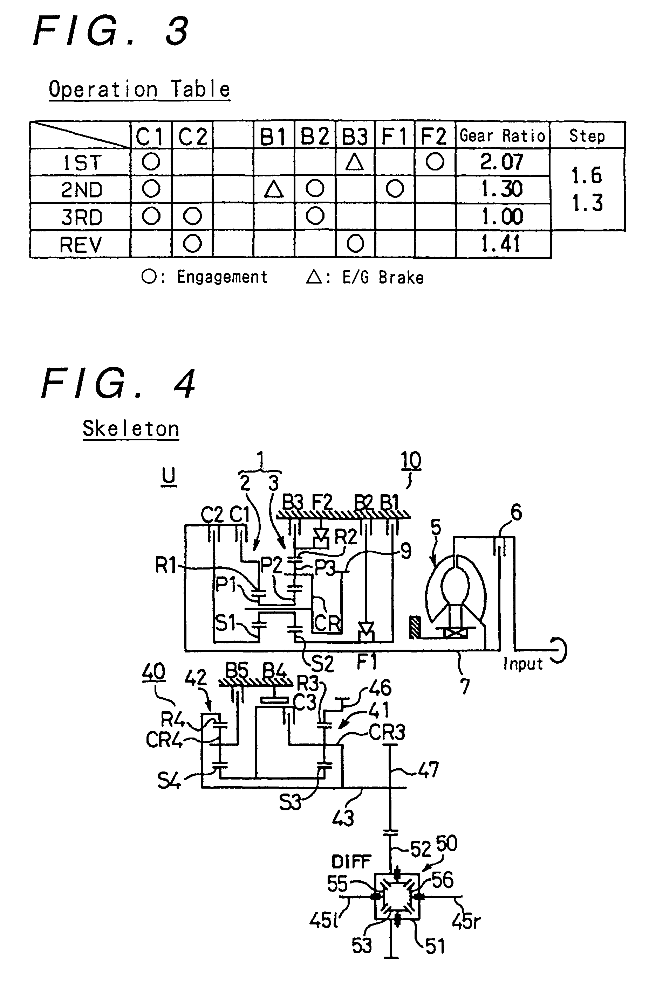

The above-mentioned automatic main transmission system 10 operates in accordance with the operation table as shown in Fig. 3.

That is, in the first range (1ST) state, the forward clutch C1 is engaged, and the second one-way clutch F2 operates to hold the ring gear R2 of the double pinion planetary gear 3 in the stopped state. In this state, since rotation of the input shaft 7 is transmitted to the ring gear R1 of the simple planetary gear 2 via the forward clutch C1 and the ring gear R2 of the double pinion planetary gear 3 is in the stopped state, the carrier CR rotates at a drastically reduced rate while the two sun gears S1, S2 idle in the reverse direction, and the reduced rotational rate is obtained from the counter drive gear 9. The gear ratio λ ₁ in the first range state can be described (with Z indicating the number of the teeth of each gear) as 1 + (Z_{R2}/Z_{R1}) × (Z_{P1}/Z_{P2}), which leads to a concrete value of 2.07.

In the second range (2ND) state, the second brake B2 is in operation in addition to the forward clutch C1, and further, operation is switched from the second one-way clutch F2 to the first one-way clutch F1. In this state, the sun gear S2 of the double pinion planetary gear 3 is stopped by the second brake B2 and the one-way clutch F1. Thus, rotation of the ring gear R1 of the simple planetary gear 2 transmitted from the input shaft 7 via the forward clutch C1 causes the carrier CR to rotate at a reduced rate in the positive direction while the ring gear R2 of the double pinion planetary gear 3 and the sun gear S1 of the simple planetary gear 2 idle in the positive direction. As a result, the reduced rotational rate is obtained from the counter gear 9. The gear ratio λ₂ in the second range state can be described as 1 + (Z_{S2}/Z_{R1}) × (Z_{P1}/Z_{P2}) which leads to a concrete value of 1.30. In this case, since the firs pinion P1 has a diameter smaller than that of the second pinion P2 (Z_{P} <Z_{P2}) and the two pinions rotate integrally, the gear ratio λ ₂ can b made smaller than the second gear ratio of the prior art without enlargin the diameter of the ring gear R1 of the simple planetary gear 2 (the number of teeth Z_{R1}) because of the multiplication by the term (Z_{P1}/Z_{P2}), which is always equal to 1.0 or less.

In the third range (3RD) state, the direct clutch C2 is engaged in addition to the forward clutch C1. In this state, rotation of the input shaft 7 is transmitted to the sun gear S1 as well as to the ring gear R1 of the simple planetary gear 2, causing the gear unit 1 comprising the single and double pinion planetary gears 2, 3 to rotate integrally so that the lock-up rotation is transmitted to the counter drive gear 9. Since the above-mentioned second range gear ratio λ ₂ is smaller despite the fact that the gear ratio λ ₃ is equal to 1 due to the lock-up rotation, the gear ratio step between the second range and the third range becomes smaller accordingly. The concrete value of the gear ratio step in this case is 1.3, which is smaller than 1.4, a conventionally obtained step value. Thus, while holding the enlargement of the diameter of the simple planetary gear 2 at the minimal level, the gear ratio step at a higher range side can be made smaller.

In the reverse (REV) state, the direct clutch C2 and the third brake B3 are engaged. In this state, since rotation of the input shaft 7 is transmitted to the sun gear S1 of the simple planetary gear 2 via the direct clutch C2 and the ring gear R2 of the double pinion planetary gear 3 is stopped by the third brake B3, while the ring gear R1 of the simple planetary gear 2 idles in the reverse direction and the sun gear S2 of the double pinion planetary gear 3 in the positive direction, the carrier CR rotates in the reverse direction. Thus, the reverse rotation is obtained from the counter gear 9. The gear ratio λ _{R} in the reverse range state can be described as 1 - (Z_{R2}/Z_{S1}) × (Z_{P1}/Z_{P2}), which leads to a concrete value of 1.41.

In general, it is preferable in terms of controllability that the reverse gear range ratio should be equivalent to or less than the first gear ratio. (Since the reverse gear ratio is negative, the comparison should be made as to their absolute values). Since the above-mentioned first gear ratio λ ₁ described as 1 + (Z_{R2}/Z_{R1}) X (Z_{P1}/Z_{P2}) includes multiplication by the term (Z_{P1}/Z_{P2}) which is smaller than 1.0, it becomes smaller than the first gear ratio in the prior art. Accordingly, if rotation is inputted to the sun gear S2 of the double pinion planetary gear 3 in driving backward as in the prior art, the gear ratio is described as 1 - (Z_{R2}/Z_{S2}). Since the first range gear ratio has become smaller because of the term (Z_{P1}/Z_{P2}), the above-mentioned relationship between the first range gear ratio and the reverse range gear ratio is not maintained.

Therefore, by separating the sun gears S1, S2 of the two planetary gears 2, 3 from each other and inputting rotation to the sun gear S1 of the simple planetary gear 2 in driving backward, the absolute value of the reverse range gear ratio λ _{R}, as well as the first gear ratio, can be made smaller owing to the above-mentioned multiplication by (Z_{P1}/Z_{P2}), which is smaller than 1.0. Further, since the sun gear S1 of the simple planetary gear 2 can be formed larger by providing the first pinion P1 with a smaller diameter, (Z_{R2}/Z_{S1}) becomes smaller, further making the reverse range gear ratio smaller.

The operating state of the engine brake is denoted by triangle marks as shown in Fig. 3. That is, in the first range state, the third brake B3 is engaged and the ring gear R2 of the double pinion planetary gear 3 is maintained in the stopped state. If the third brake is released, said ring gear R2 is caused to keep rotating by the second one-way clutch F2. In the second range state, the first brake B1 is engaged and the sun gear S2 of the double planetary gear 3 is maintained in the stopped state. If the brake B1 is not engaged, the sun gear S2 is caused to keep rotating by the first one-way clutch F1.

Another embodiment of a five range automatic transmission U comprising the above-mentioned main automatic transmission system 10 according to the present invention and a three range sub-transmission system 40 will be explained with reference to Fig. 4.

The sub-transmission system 40 is arranged on a second shaft (U/D shaft) 43 located parallel to the first shaft comprising the above-mentioned input shaft 7, and the first and second shafts with a third shaft comprising differential shafts (left and right axles) 451, 45r form a triangle-like shape when viewed from the side. The sub-transmission system 40 comprises first and second simple planetary gears 41, 42, and a carrier CR3 of the first simple planetary gear 41 and a ring gear R4 of the second simple planetary gear 42 are connected integrally, and sun gears S3, S4 are coupled integrally to form a Simpson type gear line. Further, a ring gear R3 of the first simple planetary gear 41 is connected to a counter driven gear 46 to form an input portion, and the carrier CR3 of the first single planetary gear 41 and the ring gear R4 of the second simple planetary gear 42 are coupled to a reduction gear 47, which provides an output portion. Further, a UD direct clutch C3 is interposed between the ring gear R3 of the first single planetary gear 41 and the integral sun gear S3, S4, and the integral sun gear S3 (S4) can be selectively stopped by a fourth brake B4, while a carrier CR4 of the second single planetary gear 42 can be selectively stopped by a fifth brake B5. Accordingly, the sub-transmission system 40 can provide three forward ranges.

Further, a differential device 50 comprising the third shaft is provided with a diff case 51, and a gear 52 engaging the above-mentioned reduction gear 47 is fixed to the case 51. A diff gear 53 and left and right side gears 55, 56 are mutually engaged and rotatably supported inside the diff case 51, and the left and right axles 451, 45r are arranged to extend from the left and right side gears 55, 56. Accordingly, rotation from the gear 52 is distributed to the left and right wheels via the left and right axles 451, 45r according to the load torque applied to the wheels.

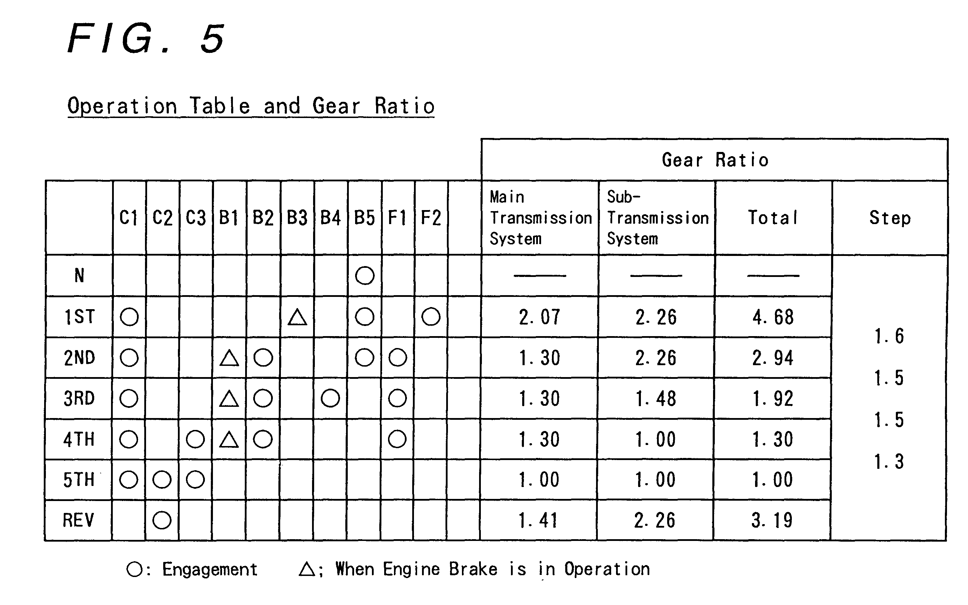

Operation of the five range automatic transmission U will be explained with reference to the operation table as shown in Fig. 5.

In the first range (1ST) state, the forward clutch C1, the second one-way clutch F2 and the fifth brake B5 are engaged. Accordingly, the main transmission system 10 is brought into the first range state, and the reduced rotational rate is transmitted to the ring gear R3 of the first simple planetary gear 41 in the sub-transmission system 40 via the counter gears 9, 46. The sub-transmission system 40 is in the first range state with the carrier CR4 of the second simple planetary gear 42 stopped by the fifth brake B5, and the above-mentioned reduced rotational rate of the main transmission system 10 is further reduced by the sub-transmission system 40 to be transmitted to the axles 451, 45r via the gears 47, 52 and the differential device 50.

In the second range (2ND) state, in addition to the forward clutch C1, the second brake B2 is engaged, and operation is switched from the second one-way clutch F2 to the first one-way clutch F1 smoothly. Then, the main transmission system 10 is brought into the second range state as mentioned above. Further, the sub-transmission system 40 is in the first range state owing to the engagement of the fifth brake B5, and the combination of the second range state and the first range state provides the second range state in the automatic transmission U as a whole.

In the third range (3RD) state, the main transmission system 10 is in the same state as the above-mentioned second range state with the forward clutch C1, the second brake B2 and the first one-way clutch F1 engaged, and the sub-transmission system 40 brings the fourth brake B4 into engagement. Then, the sun gears S3, S4 of the first and second simple planetary gears 41, 42 are fixed, and rotation from the ring gear R3 of the first simple planetary gear 41 is outputted from the carrier CR3 as the second range rotation. As a result, the combination of the second range state in the main transmission system 10 and the second range state in the sub-transmission system 40 provides the third range state in the automatic transmission U as a whole.

In the fourth range (4TH) state, the main transmission system 10 is in the same state as the above-mentioned second range and third range with the forward clutch C1, the second brake B2 and the first one-way clutch F1 engaged. The fourth brake B4 is released and the UD direct clutch C3 is engaged by the sub-transmission system 40. In this state, the ring gear R3 of the first simple planetary gear 41 and the sun gear S3 (S4) are coupled to provide lock-up rotation, namely, to cause both planetary gears 41, 42 to rotate integrally. Accordingly, the combination of the second range state in the main transmission system 10 and the lock-up (3RD) state of the sub-transmission system 40 provides the fourth range rotation in the automatic transmission U as a whole.

In the fifth range (5TH) state, the forward clutch C1 and the direct clutch C2 are engaged, and rotation of the input shaft 7 is transmitted to the ring gear R1 of the simple planetary gear and the sun gear S1 so that the main transmission system 10 is brought into the lock-up state, causing the gear unit 1 to rotate integrally. Further, the sub-transmission system 40 is also in the lock-up state with the UD direct clutch C3 engaged. Thus, the combination of the third range (lock-up) state of the main transmission system 10 and the third range (lock-up) state of the sub transmission system 40 provides the fifth range rotation in the automatic transmission U as a whole.

In the reverse range (REV) state, the direct clutch C2 and the third brake B3 are engaged, and the fifth brake B5 is also engaged. In this state, in the main transmission system 10, reverse rotation is outputted as mentioned above. On the other hand, since the carrier CR4 of the second planetary gear 42 is stopped also in the reverse rotational direction based on the engagement of the fifth brake B5, the sub-transmission system 40 is maintained in the first range state. Accordingly, the combination of the reverse rotation of the main transmission system 10 and the first range rotation of the sub-transmission system 40 provides a reduced rotational rate in the reverse direction.

In Fig. 5, as in Fig. 3, the operating state of the engine brake is denoted by triangle marks. That is, in the first range state, the third brake B3 is engaged to fix the ring gear R2 of the double pinion planetary gear 42 instead of the second one-way clutch F2. In the second, third, and fourth range states, the first brake B1 is engaged to fix the sun gear S2 of the double pinion planetary gear 42 instead of the first one-way clutch F1.

Since the fourth and fifth range gear ratio steps are obtained by shifting the main transmission system 10 into the second and third ranges, the gear ratios and gear ratio steps as shown in Fig. 5 are small as mentioned above, and a smaller gear ratio step in a higher range side provides a small gear ratio width. However, by compensating such gear ratio width with the combination of the sub-transmission system 40 which increases the number of forward ranges up to five, a desirable gear ratio step is maintained from the lowest range to the highest range in the automatic transmission U as a whole. Gear ratios and steps are not limited to the values as shown in the Table, but can be adjusted within the range defined in the Claims.

The planetary gear unit does not need to comprise the sun gear S1 (the second sun gear) of the simple planetary gear if the above-mentioned desirable gear ratio can be disregarded in driving backward. In this case, the direct clutch C2 is interposed between the input shaft 7 and the sun gear S2 (the first sun gear ) of the double pinion planetary gear so that rotation is inputted to the sun gear S2 in driving backward.

The sub-transmission system is not limited to the above-mentioned Simpson type but can be realized in the form of a different shifting gear system. Also, it is not limited to those systems providing three forward ranges but can be realized in the form of a sub-transmission system providing two forward ranges in combination with the main automatic transmission system, thus achieving a four range automatic transmission as a whole. Further it is also possible to provide a sub-transmission system exclusively for reduction.

### Effects of the Invention

As heretofore mentioned, since the carrier is connected to the output member and torque from the input member is inputted to the first ring gear in driving forward, a compact structure can be achieved as in the prior art. On the other hand, a smooth drive of the vehicle can be realized without causing busy shifts when driving at high speed by providing a small gear ratio step at a higher range side based on a structure in which a first pinion has a diameter smaller than that of a second pinion having a small gear ratio in the second range state.

Further, in spite of the fact that the gear ratio in the first range state becomes smaller by providing a smaller gear ratio in the second range state, since torque from the input member is inputted to the second sun gear in the reverse range state and the first and second sun gears can be separated from each other to allow relative rotation thereof, the reverse range gear ratio can be set at a small value. Thus the gear ratio relationship between the first range and the reverse range is not damaged so as not to deteriorate the controllability.

Further, by achieving an automatic transmission providing five forward ranges and one reverse range as a whole in combination with a sub-transmission system having three forward ranges, a smaller gear ratio step is obtained at the higher range side as mentioned above. Thus, the entire gear ratio steps can be improved, compensating too small a gear ratio width.

## Claims

1. An automatic transmission comprising an input member (7) to which the motive power from an engine is transmitted, an output member (9) from which the motive power is transmitted to wheels, and a planetary gear unit (1), wherein rotation from the input member (7) is outputted to the output member (9) via a plurality of transmission paths of the planetary gear unit (1), said planetary gear unit (1) comprising a first ring gear (R1), a first pinion (P1) engaging the first ring gear, a second pinion (P2) coupled to the first pinion so as to rotate integrally therewith, a third pinion (P3) engaging the second pinion (P2), a second ring gear (R2) engaging the third pinion (P3), a first sun gear (S2) engaging the second pinion (P2), a carrier (CR) supporting the first, second and third pinions as well as being coupled to the output member (9), said first pinion (P1) having a diameter smaller than that of said second pinion (P2), a first range being achieved by transmitting rotation of the input member (7) to the first ring gear (R1) as well as stopping the second ring gear (R2), a second range being achieved by transmitting rotation of the input member (7) to the first ring gear (R1) as well as stopping the first sun gear (S2), and a third range being achieved by rotating the planetary gear unit (1) integrally with the input member (7).

2. The automatic transmission according to claim 1, wherein the planetary gear unit (1) engages the first pinion (P1) and further comprises a second sun gear (S1) which can rotate relatively with respect to the first sun gear (S2), a reverse range being achieved by transmitting rotation of the input member (7) to the second sun gear (S1) as well as stopping the second ring gear (R2).

3. The automatic transmission according to claim 2, wherein the automatic transmission system (10) comprises a first clutch (C1) interposed between the input member (7) and the first ring gear (R1), a second clutch (C2) interposed between. the input member (7) and the second sun gear (S1), a first stopping means (B1, B2, F1) capable of selectively stopping the first sun gear (S2), and a second stopping means (B3, F2) capable of selectively stopping the second ring gear.

4. The automatic transmission according to claim 1, 2 or 3, wherein said automatic transmission further comprises a sub-automatic transmission system (40) having three forward ranges, in combination with which said automatic transmission system (10) achieves five forward ranges and one backward range as a whole.

## Patentansprüche

1. Automatikgetriebe mit einem Eingangsteil (7), zu dem die Antriebskraft von einem Motor übertragen wird, einem Ausgangsteil (9), von dem die Antriebskraft auf Fahrzeugräder übertragen wird, und einer Planetenradeinheit (1), wobei die Drehung vom Eingangsteil (7) zum Ausgangsteil (9) über mehrere Übertragungswege der Planetenradeinheit (1) übertragen wird, wobei die Planetenradeinheit (1) aufweist: ein erstes Ringrad (R1), ein erstes Planetenrad (P1), das in das erste Ringrad eingreift, ein zweites Planetenrad (P2), das mit dem ersten Planetenrad so verbunden ist, daß es in einem Stück damit dreht, ein drittes Planetenrad (P3), das in das zweite Planetenrad (P2) eingreift, ein zweites Ringrad (R2), das in das dritte Planetenrad (P3) eingreift, ein erstes Sonnenrad (S2), das in das zweite Planetenrad (P2) eingreift, einen Träger (CR), der das erste, zweite und dritte Planetenrad stützt und mit dem Ausgangsteil (9) verbunden ist, wobei das erste Planetenrad (P1) einen kleineren Durchmesser als das zweite Planetenrad (P2) hat, ein erster Gang durch Übertragen der Drehung des Eingangsteils (7) zum ersten Ringrad (R1) sowie Stoppen des zweiten Ringrads (R2) erreicht wird, ein zweiter Gang durch Übertragen der Drehung des Eingangsteils (7) zum ersten Ringrad (R1) sowie Stoppen des ersten Sonnenrads (S2) erreicht wird und ein dritter Gang durch Drehen der Planetenradeinheit (1) in einem Stück mit dem Eingangsteil (7) erreicht wird.

2. Automatikgetriebe nach Anspruch 1, wobei die Planetenradeinheit (1) in das erste Planetenrad (P1) eingreift und ferner ein zweites Sonnenrad (S1) aufweist, das relativ zum ersten Sonnenrad (S2) drehen kann, wobei ein Rückwärtsgang durch Übertragen der Drehung des Eingangsteils (7) zum zweiten Sonnenrad (S1) sowie Stoppen des zweiten Ringrads (R2) erreicht wird.

3. Automatikgetriebe nach Anspruch 2, wobei das Automatikgetriebesystem (10) aufweist: eine erste Kupplung (C1), die zwischen dem Eingangsteil (7) und dem ersten Ringrad (R1) eingefügt ist, eine zweite Kupplung (C2), die zwischen dem Eingangsteil (7) und dem zweiten Sonnenrad (S1) eingefügt ist, eine erste Stoppeinrichtung (B1, B2, F1), die das erste Sonnenrad (S2) selektiv stoppen kann, und eine zweite Stoppeinrichtung (B3, F2), die das zweite Ringrad selektiv stoppen kann.

4. Automatikgetriebe nach Anspruch 1, 2 oder 3, wobei das Automatikgetriebe ferner ein Teilautomatikgetriebesystem (40) mit drei Vorwärtsgängen aufweist, mit dem das Automatikgetriebesystem (10) in Kombination insgesamt fünf Vorwärtsgänge und einen Rückwärtsgang erreicht.

## Revendications

1. Transmission automatique comprenant un organe d'entrée (7), auquel la puissance motrice délivrée par un moteur est transmise, un organe de sortie (9), à partir duquel la puissance motrice est transmise à des roues, et une unité d'engrenage planétaire (1), et dans laquelle une rotation de l'arbre d'entrée (7) est appliquée à l'organe de sortie (9) par l'intermédiaire d'une pluralité de trajets de transmission de l'unité d'engrenage planétaire (1), ledit engrenage planétaire (1) comprenant une première couronne dentée (R1), un premier pignon (P1) engrenant avec la première couronne dentée, un second pignon (P2) couplé au premier pignon de manière à tourner solidairement avec ce dernier, un troisième pignon (P3) engrenant avec le second pignon (P2), une seconde couronne dentée (R2) engrenant avec le troisième pignon (P3), une première roue planétaire (S2) engrenant avec le second pignon (P2), un support (CR) supportant les premier, second et troisième pignons et couplé à l'organe de sortie (9), ledit premier pignon (P1) possédant un diamètre inférieur à celui dudit second pignon (P2), une première gamme étant obtenue par transmission de la rotation de l'organe d'entrée (7) à la première couronne dentée (R1) ainsi que par arrêt de la seconde couronne dentée (R2), une seconde gamme étant obtenue par transmission d'une rotation de l'organe d'entrée (7) à la première couronne dentée (R1) ainsi que par arrêt de la première roue planétaire (S2), une troisième gamme étant obtenue par entraînement en rotation de l'unité d'engrenage planétaire (1) solidairement avec l'arbre de l'organe d'entrée (7).

2. Transmission automatique selon la revendication 1, dans laquelle l'unité d'engrenage planétaire (1) engrène avec le premier pignon (P1) et comprend en outre une seconde roue planétaire (S1), qui peut tourner par rapport à la première roue planétaire (S2), une gamme de marche arrière étant obtenue par transmission d'une rotation de l'organe d'entrée (7) à la seconde roue planétaire (S1) ainsi que par arrêt de la seconde couronne dentée (R2).

3. Transmission automatique selon la revendication 2, dans laquelle le système de transmission automatique (10) comprend un premier embrayage (C1) intercalé entre l'organe d'entrée (7) et la première couronne dentée (R1), un second embrayage (C2) intercalé entre l'organe d'entrée (7) et la seconde roue planétaire (S1), des premiers moyens d'arrêt (B1,B2,F1) aptes à arrêter sélectivement la première roue planétaire (S2), et des seconds moyens d'arrêt (B3,F2) aptes à arrêter sélectivement la seconde couronne dentée.

4. Transmission automatique selon la revendication 1, 2 ou 3, dans laquelle ladite transmission automatique comporte en outre un système de transmission sous-automatique (40) comportant trois gammes de marche avant, et ledit système de transmission automatique (10) fournit, en combinaison avec cette transmission automatique, globalement cinq gammes de marche avant et une gamme de marche arrière.
